(19) Europäisches Patentamt / European Patent Office / Office européen des brevets

(11) EP 1 590 117 B1

(12) **EUROPEAN PATENT SPECIFICATION**

(45) Date of publication and mention of the grant of the patent: **09.06.2010 Bulletin 2010/23**

(21) Application number: **04708535.2**

(22) Date of filing: **05.02.2004**

(51) Int Cl.: ***B23B 27/00*** *(2006.01)* ***B23C 5/00*** *(2006.01)*

(86) International application number: **PCT/SE2004/000151**

(87) International publication number: **WO 2004/069455 (19.08.2004 Gazette 2004/34)**

# (54) TOOL FOR DIFFERENT TYPES OF CHIP REMOVING MACHINING

WERKZEUG FÜR VERSCHIEDENE ARTEN VON SPANABHEBENDER BEARBEITUNG

OUTIL POUR REALISER DIFFERENTS TYPES D'USINAGE PAR ENLEVEMENT DE COPEAUX

(84) Designated Contracting States:
**AT BE BG CH CY CZ DE DK EE ES FI FR GB GR HU IE IT LI LU MC NL PT RO SE SI SK TR**

(30) Priority: **06.02.2003 SE 0300296**

(43) Date of publication of application: **02.11.2005 Bulletin 2005/44**

(73) Proprietor: **Sandvik Intellectual Property AB
811 81 Sandviken (SE)**

(72) Inventors:
- **PINGER, Franz
A-2103 Langenzersdorf (AT)**
- **RESCHREITER, Blasius
A-5441 Abtenau (AT)**

(74) Representative: **Taquist, Henrik Lennart Emanuel
Sandvik Intellectual Property AB
811 81 Sandviken (SE)**

(56) References cited:
**EP-A1- 1 166 930**
**EP-A1- 1 186 367**
**WO-A1-03/070405**
**DE-A1- 3 733 298**
**DE-A1- 19 857 841**
**US-A- 4 640 159**
**US-A- 6 132 146**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 1 590 117 B1

Printed by Jouve, 75001 PARIS (FR)

## Description

### Technical Field of the Invention.

The present invention relates to a tool for chip removing machining, the tool comprising a tool head, which is provided with cutting seats for receipt of replaceable cutting inserts as well as a fastening part, which is intended to be received in a machine tool, that the tool has at least one chip pocket, in which two replaceable cutting inserts are arranged, said cutting inserts being intended for different types of machining and have the active surfaces thereof opposite each other. The tool according to the present invention is preferably intended for metalworking.

### Prior Art

By DE 37 33 298 C2, a combination tool for chip removing machining is previously known, which according to an embodiment has two indexable inserts in the same chip pocket, the cutting inserts being located spaced-apart in the periphery direction of the tool. One of the cutting inserts is a centre cutting insert and the second cutting insert is a periphery insert. By means of said combination tool, different types of chip removing machining may be made, for instance turning, milling and drilling.

By EP 1 186 367 A1, a tool is previously known by means of which turning and milling may be made. There is no clear division of which type of machining that the cutting inserts arranged on the tool should carry out, the same cutting inserts are, for instance, used both for milling and turning. Furthermore, the two cutting inserts arranged in a chip pocket are used for turning.

### Objects and Features of the Invention

A primary object of the present invention is to provide a tool for chip removing machining of the kind mentioned in the introduction, the same tool being intended to carry out a plurality of different working operations, for instance milling and turning, at chip removing machining.

An additional object of the present invention is to arrange the replaceable cutting inserts so that they do not interfere with each other at different types of chip removing machining.

At least the primary object of the present invention is realised by means of a tool having the features defined in the appended independent claim 1. Preferred embodiments of the invention are defined in the dependent claims.

### Brief Description of the Drawings

Below embodiments of the invention will be described, reference being made to the accompanying drawings, where:

Fig 1 shows a perspective view of a first embodiment of a tool according to the present invention;
Fig 2 shows a front view of the tool according to Fig 1;
Fig 3 shows a side view of the tool according to Fig 1 when it is in engagement with a workpiece;
Fig 4 shows a perspective view of an alternative embodiment of a tool according to the present invention; and
Fig 5 shows a front view of the tool according to Fig 4.

### Detailed Description of Preferred Embodiments of the Invention

The tool according to the present invention shown in Figs 1-3 comprises a tool head 1, which is provided with a number of cutting seats for receipt of replaceable cutting inserts 5 and 7A-7C, as well as a fastening part 9, which is integrated with the tool head 1 and intended to be received in a machine tool. The fastening part 9 may, at the free end thereof, be provided with a coupling, for instance of the trademark CAPTO®. The coupling should suitably be formed in such a way that the same is orientatable in the machine tool, i.e. it should only possible to be mounted in a such way in the machine tool that the orientation of the tool becomes known.

The cutting inserts 5 and 7A-7C are fixed in the respective cutting seats thereof in a suitable way, in the embodiment illustrated the cutting inserts 5 being fixed by means of centre screws and the cutting inserts 7A-7C being fixed by means of centre screws and lever systems. The tool according to the present invention is preferably intended for metalworking.

As is seen in Figs 1 and 2, the tool head is equipped with four milling inserts 5 as well as three turning inserts 7A-7C. The reason that the turning inserts have received individual reference designations 7A, 7B and 7C is that the inserts are of different type, the insert 7A being intended for screw threading, the insert 7B being intended for finishing

and the insert 7C being intended for roughing. With the exception of a milling insert 5, the inserts 5 and 7A-7C are grouped inpairs-so that the inserts 5, 7A-7C in pairs are located in the same chip pocket 10, the inserts 5, 7A-7C in pairs having the active surfaces thereof opposite each other in the common chip pocket 10. With the phrase "active surfaces" should be appreciated the surfaces of the respective insert that have chip-forming members, wherein an insert, for instance, may have two such surfaces if the insert is indexable.

In order for the turning inserts 7A-7C not to interfere with the milling inserts 5 when the tool according to Figs 1-3 is used for milling, the milling inserts 5 have an axial extension past the turning inserts 7A-7C, the axial direction of the tool being defined by the centre line CL of the tool. In Fig 3, the difference in axial extension is shown for two inserts 5 and 7A arranged in a common chip pocket, said difference in Fig 3 having been given the designation $\delta$. With an exemplifying and not limiting purpose, it is given that normally $\delta$ is in the interval 0,2 mm < $\delta$ < 1 mm. With the same purpose, the points of the turning inserts 7A-7C located farthest out in the radial direction are located closer the centre line CL of the tool than the points of the milling inserts 5 located farthest out in the radial direction. In Fig 2, the distance between this point and the centre line CL of the tool for the turning insert 7C is illustrated with the reference designation R2 while the corresponding distance for a milling insert 5 is designated R1. In that connection, the relation R1 > R2 should be valid. With an exemplifying and not limiting purpose, it is given that normally the distance R1-R2 is in the interval 0,2 mm < R1-R2 < 2mm.

In Fig 2 is seen that the cutting edges 11 for the turning inserts 7A-7C are displaced a certain distance in respect of a first reference line L1, which passes through the centre of rotation of the tool, in which the rotational axis CL of the tool is situated, said rotational axis CL having an extension perpendicular to the plane of the paper in Fig 2. The cutting edge 11A of the insert 7A is situated at the distance a from the first reference line L1 and the cutting edge 11B of the insert 7B is situated at the distance b from the first reference line L1. The distances a and b are measured in the plane of the paper in Fig 2.

In Fig 3 is shown how the tool according to the present invention machines a workpiece A and more precisely how the turning insert 7B machines the workpiece A. In this connection, it should be pointed out that at pressing the tool as Fig 3 shows, i.e. that the inserts 7A and 7B machine the workpiece A, the first reference line L1 should be parallel with the centre axis/rotational axis CL1 of the workpiece. This is necessary in order for the cutting edges 11A and 11B of the inserts 7A and 7B, respectively, should obtain a correct orientation in relation to the workpiece A as for, for instance, chip breaking and clearance. In the case shown in Fig 3, the first reference line L1 is displaced laterally the distance b in relation to the rotational axis CL1 of the workpiece, the displacement of the first reference line L1 taking place in a plane which generally defines the front surface of the tool shown in Figs 2 and 3.

Thus, as has been described above and as is seen in Figs 2 and 3, the cutting edge 11A is located at the distance a from the first reference line L1 while the cutting edge 11B is situated at the distance b from the first reference line L1. Thereby, the cutting edges 11A, 11B are located on both sides of the first reference line L1. This arrangement is made in order for the turning insert 7A not to interfere with the workpiece A when the turning insert 7B machines the workpiece A. This means that the cutting edges 11A and 11B are located at the distance a+b from each other, see Fig 3. Thereby, it is guaranteed that the turning insert 7A does not interfere with the workpiece A when the turning insert 7B performs chip removing machining of the workpiece A. In Fig 3, is "the clearance"/safety margin for the insert 7A in relation to the workpiece A is designated c.

Below, a derivation that has been made is accounted for, the displacement a having been calculated function of the clearance c. In this case, it has been assumed that a=b.

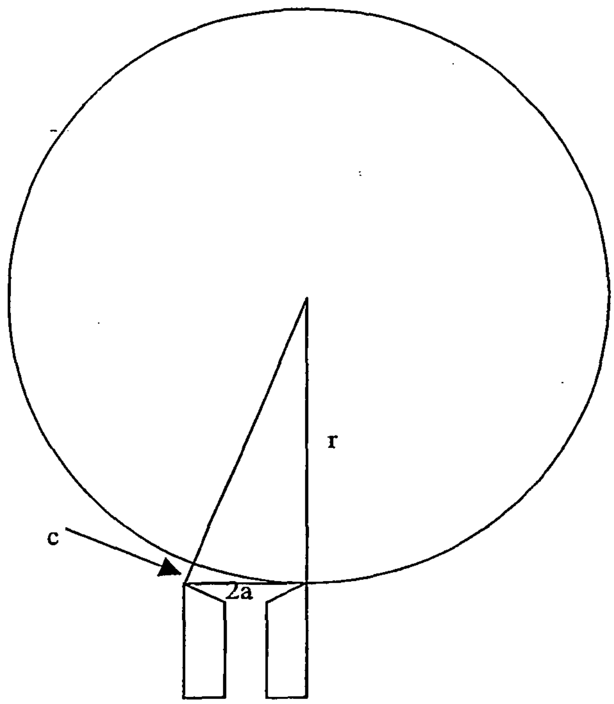


a = offset in mm total offset = 2a

r = radius in mm of the workpiece

c = safety margin in mm

Pythagorean theorem gives $r^2 + (2a)^2 = (r + c)^2 \Rightarrow r^2 + 4a^2 = r^2 + c^2 + 2rc$

Subtract $r^2$ from both sides and divide by 4. Then extract the root of the obtained expression and the following relation is obtained:

$$a = \sqrt{\frac{r \times c}{2} + \frac{c^2}{4}}$$

with c = 0,2 mm then

$$a = \sqrt{\frac{r}{10} + \frac{1}{100}}$$

Thus, with the derivation made above, a relation is obtained that defines the displacement a as a function of the radius of the workpiece, wherein different clearance/safety margin c may be chosen.

In Figs 4 and 5, an alternative tool according to the present invention is shown, which is equipped with eight inserts, more precisely four milling inserts 105 and four turning inserts 107A-107D. The turning inserts 107A-107D may be of different type depending on which machining they should be carry out.

Since the number of milling inserts 105 equals the number of sing turning inserts 107A-107D, all inserts in the embodiment according to Figs 4 and 5 will be grouped in pairs, i.e. a milling insert 105 and a turning inserts 107A-107D are allocated the same insert pocket 110.

Correspondingly, as in the embodiment according to Figs 1-3, diametrically opposite turning inserts are displaced in relation to each other so that they do not in an unjustified way interfere with the workpiece when they assume an inactive position. As is best seen in Fig 5, the turning inserts 107A and 107B at the tool shown therein are displaced a certain distance in relation to the first reference line L1. More precisely, the insert 107A is located at the distance a from the first reference line L1 while the insert 107B is located at the distance b from the first reference line L1. The inserts 107A and 107B are located on both sides of the first reference line L1. Also the diametrically located inserts 107C and 107D are correspondingly located at a distance from a second reference line L2, the insert 107C being located at the distance c while the insert 107D being located at the distance d. The inserts 107C and 107D are located on both sides of the second reference line L2. As for the orientation of the reference line L2 at indexing of the tool, i.e. pressing of, for instance, the insert 107C against the workpiece, the same is valid which has been said concerning the line L1 at the description of Fig 3.

Also for the orientation ot the inserts 105, 107A-107D in the radial direction in relation to the centre line of the tool, the same is valid as for the above-described embodiment, i.e. R1 > R2.

In the appended claims, it defined that certain inserts are intended for milling and that certain inserts are intended for turning. This should be apprehended in such a way that the inserts in question are formed for primarily being used for milling and turning, respectively. However, nothing prevents that, for instance, an insert that primarily is intended for milling also may be used for turning under certain conditions.

Generally, it is valid for the tool according to the present invention that it gives the user a possibility of carrying out a plurality of different types of chip removing machining with one and the same tool.

**Feasible Modifications of the Invention**

In the above-described embodiments, diametrically located turning inserts 7A, 7B; 107A, 107B; 107C, 107D are located at a certain distance from a common reference line L1; L2, the inserts being located on both sides of the reference line. This is embodiments that give a satisfactory security so that the inactive insert should not interfere with the workpiece A. However, it is in principle sufficient that one of the inserts is located at a certain distance from the common reference line L1; L1, L2. The interesting thing in the context is the mutual distance between diametrically opposite inserts, i.e. a+b; a+b or c+d. Of course, it is realized that a may, for instance, be zero if b is large enough in order for the inactive insert not to interfere with the workpiece A.

**List of Reference Designations**

| | |
|---|---|
| 1; 101 | Tool head |
| 5; 105 | Replaceable cutting inserts |
| 7A-7C; 107A-107D | Replaceable cutting inserts |
| 9; 109 | Fastening part |
| 10; 110 | Chip pocket |
| 11A, 11B; 111A-111C | Cutting edges |
| CL | Centre line |
| CL1 | Rotational axis |
| L1 | First reference line |
| L2 | Second reference line |
| R1 | First radially distance |
| R2 | Second radially distance |

**Claims**

1. Tool for chip removing machining, the tool comprising a tool head (1; 101), which is provided with cutting seats for receipt of replaceable cutting inserts (5,7A-7C ; 105, 107A-107D) as well as a fastening part (9; 109), which is intended to be received in a machine tool, the tool head (1; 101) having at least one chip pocket (10; 110), in which two replaceable cutting inserts (5,7A-7C; 105, 107A-107D) are arranged, said cutting inserts (5,7A-7C ; 105, 107A-107D) being intended for different types of machining and having the active surfaces thereof opposite each other, a first cutting insert (5; 105) in the chip pocket (10; 110), in the radial direction of the tool, with the radially outermost part thereof is located outside (R1 > R2) the radially outermost the part of a second cutting insert (7A; 107A) in the chip pocket (10; 110),

**characterized in that** the first cutting insert (5; 105) is intended for rotary machining and that the second cutting insert (7A; 107A) is intended for turning, that the first cutting inserts (5; 105) are identical, and that the active surface of all inserts (7A, 107A) on the tool head that are intended for turning are facing the same rotational direction.

2. Tool according to claim 1, **characterized in that** the first cutting insert (5; 105), in the axial direction of the tool, projects past the second cutting insert (7A; 107A).

3. Tool according to claim 1 or 2, **characterized in that** the active cutting edges of the cutting inserts (5,7A-7C, 105, 107A-107D) are arranged in connection with the periphery of the tool head (1; 101).

4. Tool according to any one of claims 1-3, **characterized in that** the tool has at least two chip pockets (10; 110), which are diametrically arranged on the tool head (1; 101).

## Patentansprüche

1. Werkzeug zur spanabhebenden Bearbeitung, wobei das Werkzeug einen Werkzeugkopf (1; 101) umfasst, der mit Schneideinsatzsitzen zur Aufnahme von ersetzbaren Schneideinsätzen (5, 7A-7C; 105 107A-107D) und mit einem Befestigungsteil (9; 109) ausgestattet ist, das dazu vorgesehen ist, in einer Werkzeugmaschine aufgenommen zu werden, wobei der Werkzeugkopf (1; 101) wenigstens eine Spantasche (10; 110) aufweist, in der zwei austauschbare Schneideinsätze (5, 7A-7C; 105, 107A-107D) angeordnet sind, wobei die Schneideinsätze (5, 7A-7C; 105, 107A-107D) für verschiedene Arten der Bearbeitung vorgesehen sind und deren aktive Oberflächen einander gegenüberliegen, wobei das am weitesten außen liegende Teil eines ersten Schneideinsatzes (5; 105) in der Spantasche (10; 110) in radialer Richtung des Werkzeugs weiter außen (R1 >R2) als der radial am weitesten außen liegenden Teil eines zweiten Schneideinsatzes (7A-107A) in der Spantasche (10; 110) angeordnet ist,
**dadurch gekennzeichnet, dass** der erste Schneideinsatz (5; 105) für rotierende Bearbeitung und der zweite Schneideinsatz (7A-107A) zum Drehen vorgesehen ist, dass die ersten Schneideinsätze (5; 105) identisch sind, und dass die aktive Oberfläche von allen Einsätzen (7A; 107A) auf dem Werkzeugkopf, die zum Drehen vorgesehen sind, in die gleiche Drehrichtung ausgerichtet ist.

2. Werkzeug nach Anspruch 1, **dadurch gekennzeichnet, dass** der erste Schneideinsatz (5; 105) in axialer Richtung des Werkzeugs über den zweiten Schneideinsatz (7A; 107A) hinausragt.

3. Werkzeug nach Anspruch 1 oder 2, **dadurch gekennzeichnet, dass** die aktiven Schneidkanten der Schneideinsätze (5, 7A-7C; 105, 107A-107D) mit dem Umfang des Werkzeugkopfes (1; 101) verbunden angeordnet sind.

4. Werkzeug nach einem der Ansprüche 1 bis 3, **dadurch gekennzeichnet, dass** das Werkzeug wenigstens zwei Spantaschen (10; 110) aufweist, die auf dem Werkzeugkopf (1; 101) diametral gegenüberliegend angeordnet sind.

## Revendications

1. Outil d’usinage par enlèvement de copeaux, l’outil comprenant une tête porte-outil (1 ; 101), qui présente des assises de coupe pour recevoir des plaquettes de coupe remplaçables (5, 7A-7C ; 105, 107A-107D), ainsi qu’une partie de fixation (9 ; 109), qui est destinée à être montée dans une machine d’usinage, la tête porte-outil (1 ; 101) ayant au moins une poche de copeaux (10; 110), dans laquelle deux plaquettes de coupe remplaçables (5, 7A-7C ; 105, 107A-107D) sont agencées, lesdits plaquettes de coupe (5, 7A-7C ; 105, 107A-107D) étant adaptées à différents types d’usinage et ayant leurs surfaces actives opposées l’une par rapport à l’autre, une première plaquette de coupe (5 ; 105) dans la poche de copeaux (10 ; 110), dans la direction radiale de l’outil, ayant sa portion la plus à l’extérieur radialement disposée à l’extérieur (R1>R2) de la partie la plus à l’extérieur radialement d’une seconde plaquette de coupe (7A ; 107A) dans la poche de copeaux (10 ; 110),
**caractérisé en ce que**
la première plaquette de coupe (5 ; 105) est adaptée à un usinage rotatif et **en ce que** la seconde plaquette de coupe (7A ; 107A) est adaptée au tournage, **en ce que** les premières plaquettes de coupe (5 ; 105) sont identiques, et **en ce que** les surfaces actives de toutes les plaquettes (7A, 107A) sur la tête porte-outil qui sont adaptées au tournage font face à la même direction rotationnelle.

2. Outil selon la revendication 1, **caractérisé en ce que** la première plaquette de coupe (5 ; 105), dans la direction

axiale de l'outil, s'étend au-delà de la seconde plaquette de coupe (7A ; 107A).

**3.** Outil selon la revendication 1 ou 2, **caractérisé en ce que** les arêtes de coupe actives des plaquettes de coupe (5, 7A-7C, 105, 107A-107D) sont disposés en relation avec la périphérie de la tête porte-outil (1 ; 101).

**4.** Outil selon l'une quelconque des revendication 1 à 3, **caractérisé en ce que** l'outil a au moins deux poches de copeaux (10 ; 110), qui sont diamétralement disposées sur la tête porte-outil (1 ; 101).

Fig. 1

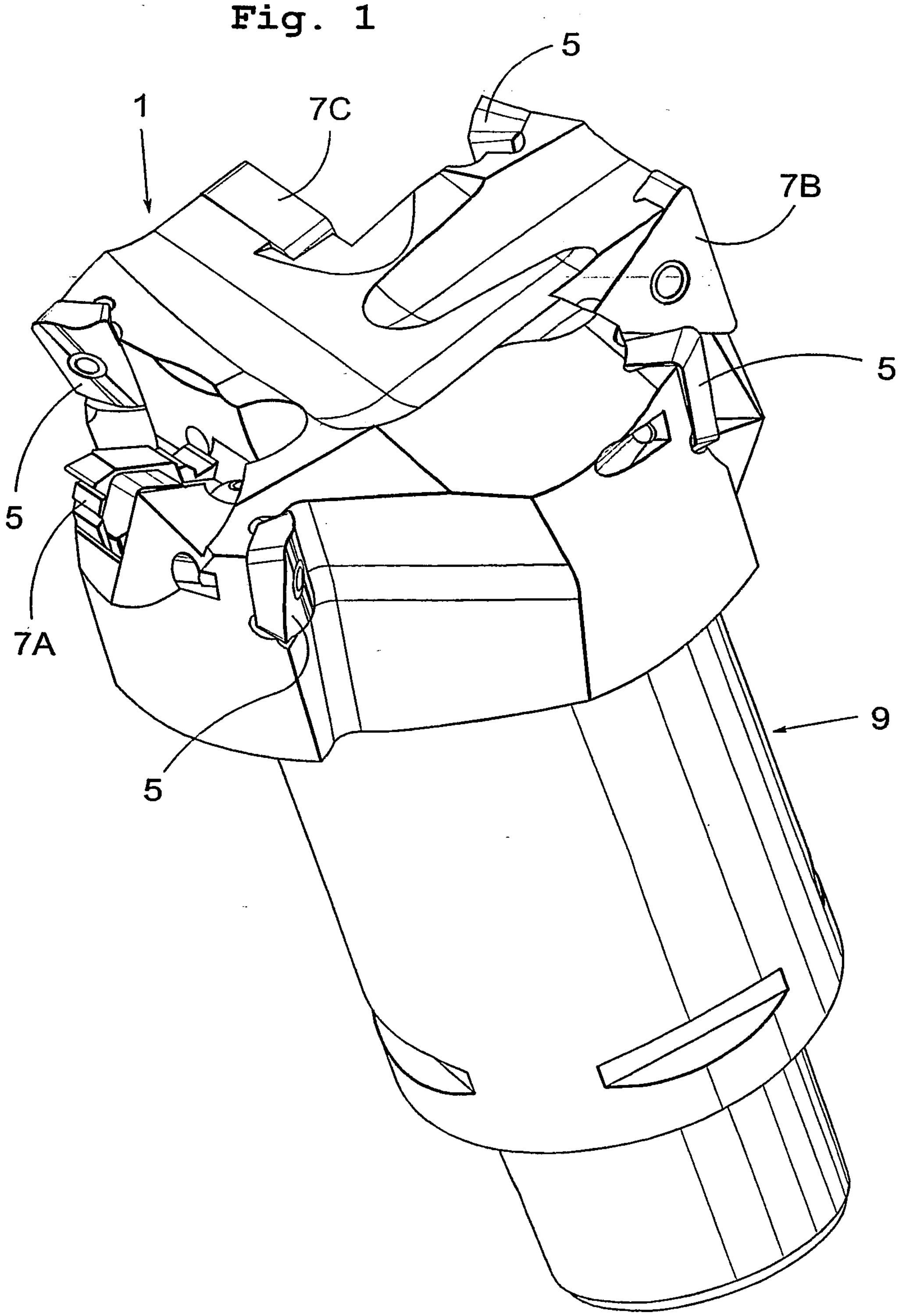

Fig. 2

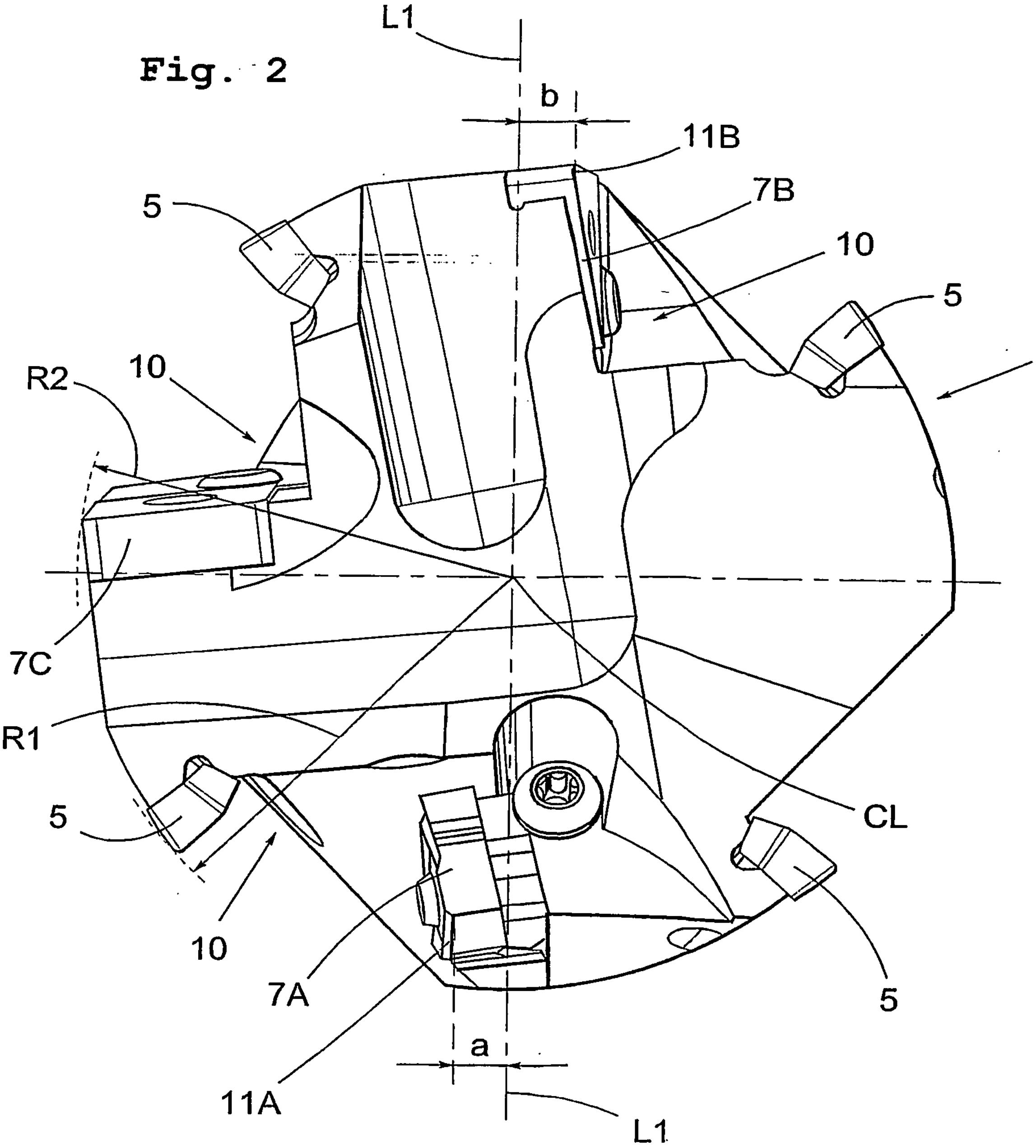

Fig. 3

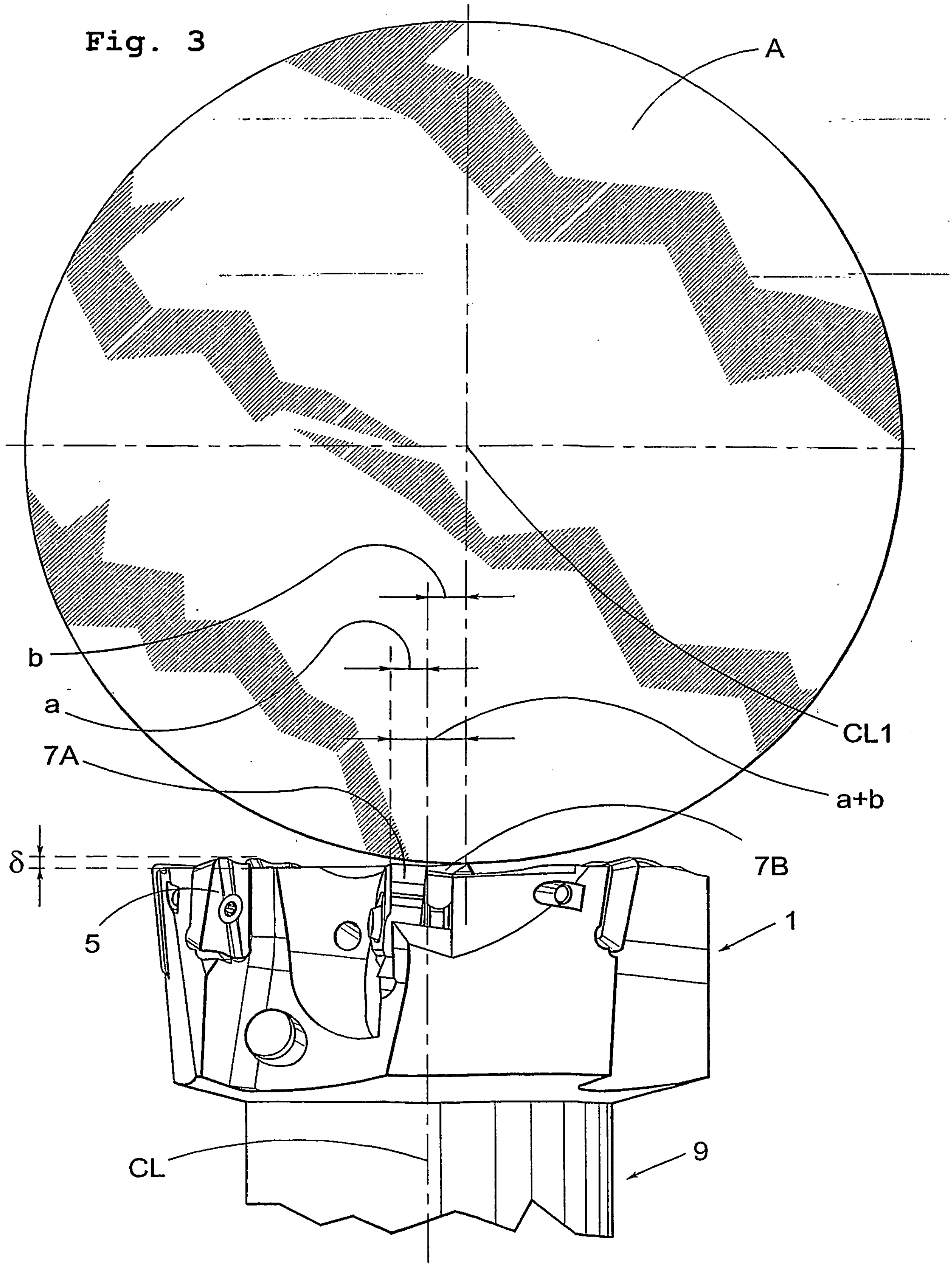

Fig. 4

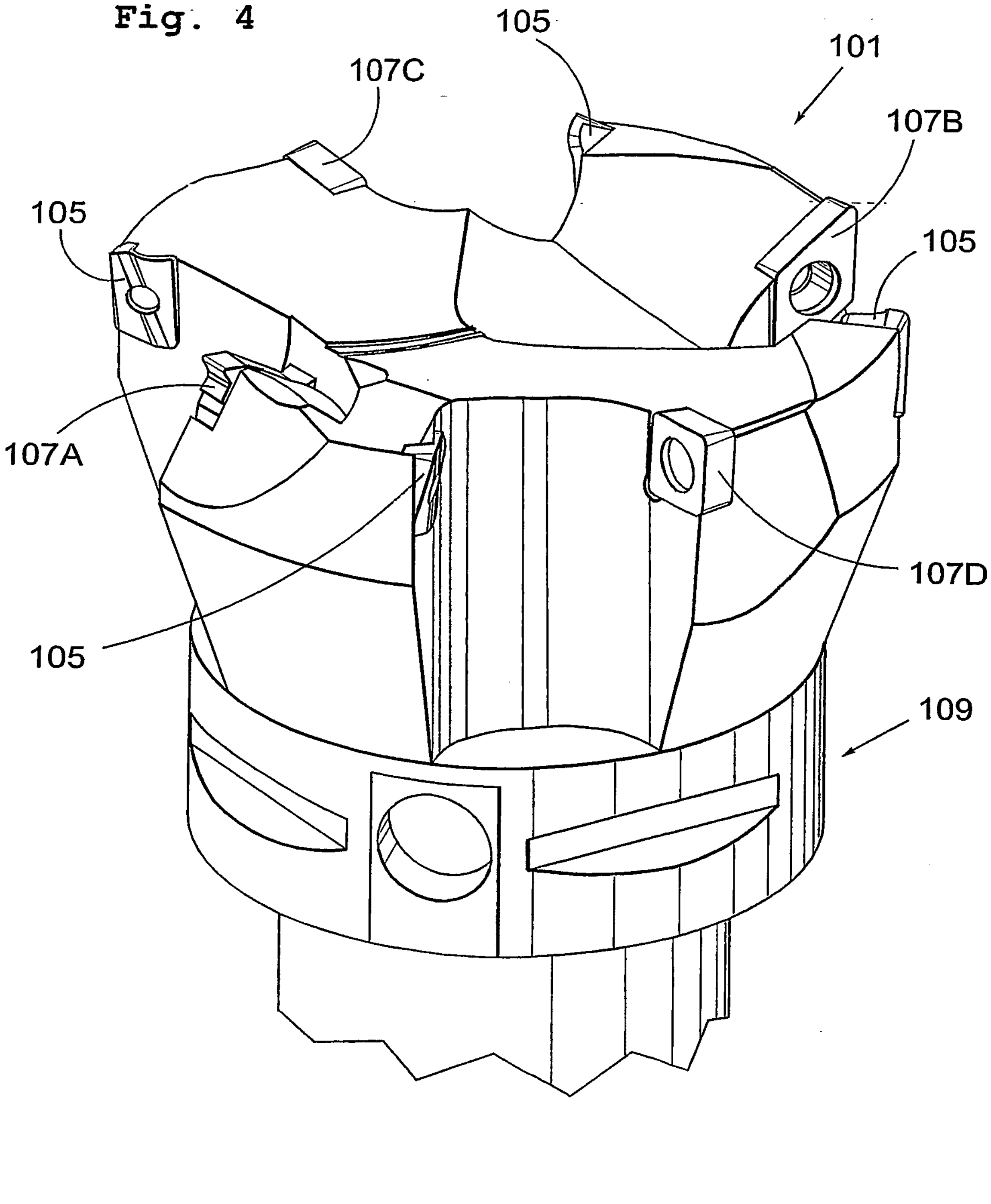

Fig. 5

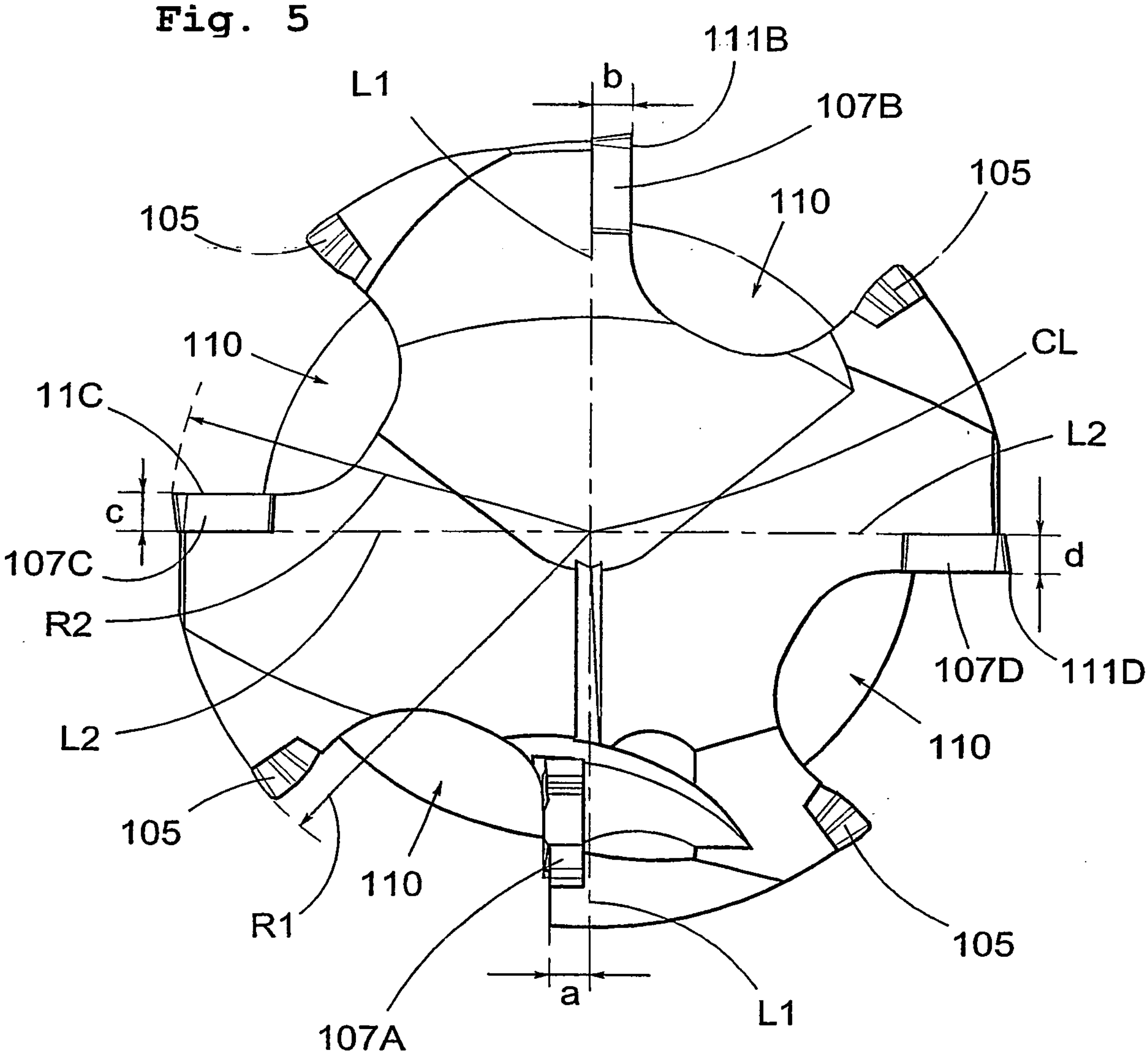
111B
b
L1
107B
105
110
105
CL
110
11C
L2
c
d
107C
R2
107D
111D
L2
110
105
110
105
R1
a
L1
107A

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 3733298 C2
- EP 1186367 A1